# EUROPEAN PATENT SPECIFICATION

(11) **EP 2 985 647 B1**
(45) Date of publication and mention of the grant of the patent: **26.06.2019**
(21) Application number: 14195361.2
(22) Date of filing: 28.11.2014
(51) Int. Cl.: G02B 6/38

(54) **Two core type optical connector plug**
Zweiadriger optischer Steckverbinder
Fiche de connecteur optique de type à deux noyaux

(30) Priority: 13.08.2014 JP 2014164788
(43) Date of publication of application: 17.02.2016
(73) Proprietor: SANWA DENKI KOGYO CO., LTD., Tokyo (JP)
(72) Inventor: Hioki, Yasusuke, Nakano-ku, Tokyo (JP); Sato, Takashi, Nakano-ku, Tokyo (JP)
(74) Representative: Carpmael, Robert Maurice Charles

(56) References cited:
- WO-A2-2014/057264
- US-A1- 2004 047 565
- US-A1- 2013 163 934
- US-A1- 2014 169 727

## Description

### TECHNICAL FIELD

The present invention relates to a two core type optical connector plug that is used as chiefly a uniboot type for two-way communication and has a pair of LC type optical connectors.

### BACKGROUND ART

Conventionally, with the spread of the Internet or the like, there is a sharp increase in the demand for a two core type optical connector unit that has an optical connector for input and an optical connector for output as a kind of optical connector and is used for two-way communication. The two core type optical connector plug creates a need to interchange sites for the pair of optical connectors for the purpose of polarity inversion thereof.

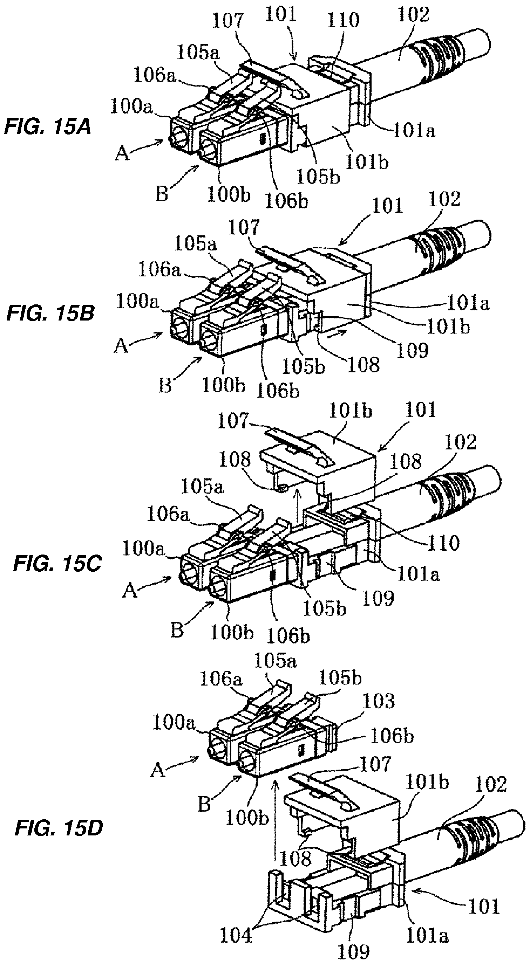

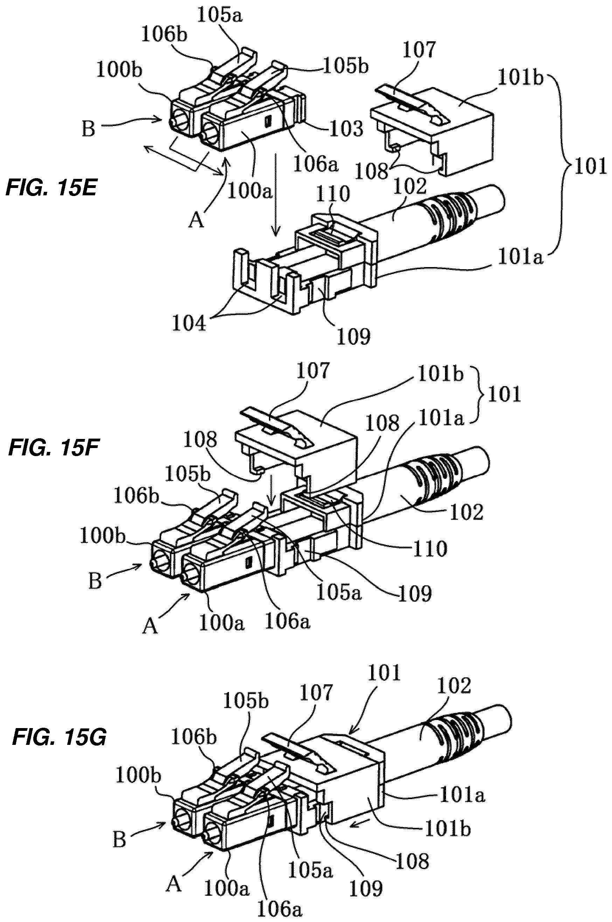

Thus, in recent years, in order to allow positions of the pair of optical connectors to be interchanged, the two core type optical connector plug is equipped with, as illustrated in Figs. 15A to 15D and Figs. 15E to 15G, a connector housing 101 that holds ferrule housings 100a and 100b of the pair of optical connectors A and B mounted on tips of a pair of optical fiber cables (not illustrated), and a single boot (uniboot structure) 102 that simultaneously protects the pair of optical fiber cables extending backward from the connector housing 101.

The connector housing 101 has an approximately square case shape forming a vertically halved structure, and is held by engaging and suspending tie portions 103 formed at the rear of the respective ferrule housings 100a and 100b with and on concave portions 104 formed in the front of a lower connector housing halved body 101a and by sandwiching the tie portions 103 by means of an upper connector housing halved body 101b. Further, latch levers 105a and 105b having vertical elasticity from respective upper surfaces toward base end sides of the ferrule housings 100a and 100b run obliquely upward in one body. Each of the latch levers 105a and 105b is provided with locking protrusions 106a and 106b at opposite sides of an intermediate portion thereof. Locking grooves (not illustrated) formed in optical adaptors and the locking protrusions 106a and 106b are engaged, and thereby the optical connectors A and B are prevented from falling out of the optical adaptors.

An upper surface of the upper connector housing halved body 101b is provided with an operating lever 107 that has elasticity in a vertical direction and runs obliquely upward toward a tip side in one body. In this case, locking claws 108 that are mutually formed inward at left and right lower edges of the upper connector housing halved body 101b are inserted along guide recess portions 109 that are formed in left and right sidewalls of the lower connector housing halved body 101a in an oblongly recessed shape.

Thus, the upper connector housing halved body 101b is caused to slide along the left and right sidewalls of the lower connector housing halved body 101a in a slightly backward direction. Thereby, an elastic locking piece 110 provided for a rear upper surface of the lower connector housing halved body 101a presses down a rear edge of the upper connector housing halved body 101b, and simultaneously the locking claws 108 of the upper connector housing halved body 101b are engaged with front lower portions of the left and right sidewalls of the lower connector housing halved body 101a relative to positions of the guide recess portions 109 of the lower connector housing halved body 101a. In this case, the operating lever 107 is engaged with the latch levers 105a and 105b of the upper surfaces of the ferrule housings 100a and 100b so as to be covered from above.

When the positions of the pair of optical connectors are interchanged relative to the connector housing 101, as illustrated in Figs. 15A and 15B, first, the upper connector housing halved body 101b is caused to slide backward while the elastic locking piece 110 of the rear of the lower connector housing halved body 101a is being pressed down by hand. In this case, the locking claws 108 of the upper connector housing halved body 101b are left out of the front lower portions of the left and right sidewalls of the lower connector housing halved body 101a, and are located at the guide recess portions 109.

Then, as illustrated in Fig. 15C, the locking claws 108 of the upper connector housing halved body 101b are caused to slide upward along the guide recess portions 109, and thereby the upper connector housing halved body 101b is pulled out of the lower connector housing halved body 101a. In this case, respective core wires (not illustrated) of the pair of optical fiber cables are exposed outside. Thereafter, as illustrated in Fig. 15D, the ferrule housings 100a and 100b of the pair of optical connectors A and B are pulled upward from the lower connector housing halved body 101a along with the respective core wires of the pair of optical fiber cables.

As illustrated in Fig. 15E, the positions of the pair of optical connectors A and B are changed left and right, and the tie portions 103 formed at the rear of the respective ferrule housings 100a and 100b are fitted into the concave portions 104 formed in the front of the lower connector housing halved body 101a. Then, as illustrated in Fig. 15F, the upper connector housing halved body 101b is covered on the lower connector housing halved body 101a. In this case, the elastic locking piece 110 of the rear of the lower connector housing halved body 101a is being pressed down by a lower surface of the upper connector housing halved body 101b, and the locking claws 108 of the upper connector housing halved body 101b are inserted along the guide recess portions 109 of the lower connector housing halved body 101a.

Then, as illustrated in Fig. 15G, the upper connector housing halved body 101b is caused to slightly slide forward along the left and right sidewalls of the lower connector housing halved body 101a. Thereby, the elastic locking piece 110 of the rear upper surface of the lower connector housing halved body 101a makes an elastic return to press the rear edge of the upper connector housing halved body 101b, and simultaneously the locking claws 108 of the upper connector housing halved body 101b move forward relative to the guide recess portions 109 of the lower connector housing halved body 101a and are engaged with the lower portions of the left and right sidewalls of the lower connector housing halved body 101a. In this case, the tie portions 103 of the rear of the respective ferrule housings 100a and 100b are held by the upper connector housing halved body 101b, and simultaneously the operating lever 107 is engaged with the latch levers 105a and 105b of the upper surfaces of the ferrule housings 100a and 100b.

Further, as the two core type optical connector plug based on another configuration capable of interchanging the positions of the pair of optical connectors, "a duplex optical fiber assembly suitable for polarity inversion and its method" are known as described in, for instance, Patent Document 1. That is, according to Patent Document 1, the duplex optical fiber assembly is made up of first and second optical fiber connector assemblies in which a locking lever runs obliquely upward in one body, and a housing that has a vertically halved structure and receives the first and second optical fiber connector assemblies such that the optical fiber connector assemblies are independently rotated along longitudinal axes thereof for polarity inversion.

Furthermore, a lever body of a square case shape is provided in such a manner that an operating lever that is engaged with the locking lever and has vertical elasticity runs obliquely upward toward a tip side in one body. The optical fiber connector assemblies are vertically inverted relative to the housing, and simultaneously the lever body is also vertically inverted and mounted relative to the housings such that the locking lever and the operating lever are disposed opposite to each other. Then, the entire housing is vertically inverted such that the locking lever and the operating lever are directed upward together. Thereby, each optical fiber connector assembly is configured to be interchangeable left and right relative to the housing.

### CITATION LIST

### PATENT DOCUMENT

Patent Document 1: US 8,152,385 B2
Patent Document 2: US 2014/0169727
Patent Document 3: WO 2014/057264
Patent Document 4: US 2013/0163934
Patent Document 5: US 2004/0047565

### DISCLOSURE OF THE INVENTION

### PROBLEM TO BE SOLVED BY THE INVENTION

However, the aforementioned conventional connector housing (the former) has the square case shape forming the vertically halved structure. As such, when the positions of the pair of optical connectors are interchanged relative to the connector housing, these connector housings of the vertically halved structure should be separated from each other. For this reason, the respective core wires of the pair of optical fiber cables extending backward from the ferrule housings of the pair of optical connectors are exposed outside. As such, there is concern that an end user (or a person exchanging the optical connectors) casually touches the core wires to do damage to the core wires.

Further, in the case of
Patent Document 1, for the polarity inversion, each optical fiber connector assembly is rotated upside down (vertically inverted) relative to the housing, and simultaneously the lever body should also be vertically inverted and mounted relative to the housing such that the locking lever and the operating lever are disposed opposite to each other, and workability is inferior. Furthermore, there is concern that, in inverting each optical fiber connector assembly, the housings of the vertically halved structure are separated from each other, and the respective core wires of the pair of optical fiber cables are exposed outside like the former.
Patent Document 2 describes a fiber optic connector including a boot receiving an optical fiber; a connector body for receiving the optical fiber and terminating the optical fiber; and a latch coupled to the connector body, the latch for engaging an adapter for receiving the fiber optic connector, the latch repositionable relative to the connector body to enable polarity change of the fiber optic connector without changing a relative position of the connector body and the optical fiber.
Patent Document 3 describes a connector device for a fibre optic cable and a method for changing the polarity of first and second optical fibres in a fibre optic cable assembly.
Patent Document 4 describes a fiber channel-interchangeable fiber optic connector including an adapter. Detaching the sub-assembly from the adapter allows rotation of the connectors and the sub-assembly through 180-degrees angle relative to the adapter to interchange the fiber channels.
Patent Document 5 describes an optical connector assembly having two optical connectors and a combiner.

Therefore, the invention has been made keeping in mind conventional various circumstances as described above, and an object of the invention is to provide a two core type optical connector plug that is used for two-way communication and has a pair of optical connectors and that allows position of the pair of optical connectors to be simply interchanged.

### MEANS FOR SOLVING PROBLEM

To solve the above problem, a two core type optical connector plug of the invention includes the features of claim 1.

Additional features are defined in the dependent claims.

### EFFECT OF THE INVENTION

According to the invention, in the two core type optical connector plug that is used for two-way communication and has a pair of optical connectors of, for instance, an LC type, the holder itself is only vertically inverted with the optical connectors mounted on the holder, and positions of the pair of optical connectors disposed left and right can be simply interchanged relative to the lever coupler formed in one body by the latch levers and the operating lever.

That is, since the two core type optical connector plug of the invention includes: a holder configured to hold ferrule housings of a pair of optical connectors to become one body and to house core wires of a pair of optical fiber cables extending backward from the ferrule housings; a boot configured to simultaneously protect the pair of optical fiber cables extending backward from the holder; and a lever coupler provided to be mountable on or demountable from the holder, wherein the lever coupler is formed such that a pair of latch levers are connected to a tip side of an operating lever mounted on a rear end of the lever coupler so as to correspond to the respective ferrule housings and provide elasticity, the two core type optical connector plug can be provided in which, when the position of the pair of optical connectors are interchanged, the lever coupler is removed from the holder, the holder is vertically inverted along with the pair of optical connectors, the lever coupler can be again installed on the inverted holder, and thereby the positions of the pair of optical connectors can be simply interchanged.

Since engaging recesses for detachably engaging engaging protrusions of tips of the pair of latch levers are formed in two upper and lower surfaces of each of the ferrule housings of the pair of optical connectors, holding performance caused by an elastic force of the lever coupler itself can be further enhanced by locking of the respective tips of the latch levers caused by the engaging recesses when the locking portions of the latch levers are engaged with engaging grooves provided for optical adaptors.

Since engaging protrusions engaged with the engaging recesses of the respective ferrule housings are formed at the tips of the pair of latch levers, the tips of the latch levers are firmly locked on the engaging recesses of respective ferrules.

Since the lever coupler is configured in such a manner that a rear end side of the operating lever is fixed to a mounting base shaped of an approximately C-shaped frame and that engaging mechanisms are arranged at sides of left and right inner wall surfaces of the mounting base and sides of left and right outer wall surfaces of the holder so as to be mutually mountable or demountable, the lever coupler is easily mounted on or demounted from the holder only by a simple operation of fingertips without using a tool such as a driver.

Since engaging mechanisms are formed by guide recess portions provided at the sides of left and right inner wall surfaces of the mounting base and by guide protrusions provided at the sides of left and right outer wall surfaces of the holder, the lever coupler is easily mounted on or demounted from the holder by a forward/backward sliding operation caused only by fingertips of the mounting base.

Since the engaging mechanisms are formed by guide protrusions provided at the sides of left and right inner wall surfaces of the mounting base and by engaging recesses provided at the sides of left and right outer wall surfaces of the holder, the lever coupler is easily mounted on or demounted from the holder by an upward/downward sliding operation caused only by fingertips of the mounting base.

Since the lever coupler is connected to present an approximate chevron shape when viewed from the side by the operating lever and the latch levers, the operating lever is pressed from above by hand. Thereby, the latch levers are stretched relative to the operating lever in an approximately flat shape, and a locking or unlocking process for the upper surfaces of the ferrule housings of the latch levers is easily performed.

Since the lever coupler is connected to present an approximately flat shape when viewed from the side by the operating lever and the latch levers, the lever coupler is fixed without being loosened from the holder, is rarely detached from the holder, and is suitable for low density mounting.

Since tapered surfaces are formed on rear ends of the engaging protrusions provided at the tips of the latch levers, the latch levers of the lever coupler can be easily removed from the ferrule housings.

### BRIEF DESCRIPTION OF DRAWINGS

Fig. 1 is a side view illustrating a two core type optical connector plug according to an embodiment of the invention;
Fig. 2 is a perspective view illustrating the two core type optical connector plug according to the embodiment of the invention;
Fig. 3 is an exploded perspective view illustrating the same two core type optical connector plug;
Fig. 4 is a pre-assembled perspective view illustrating an operating state in which a lever coupler is removed from a holder of ferrule housings of a pair of optical connectors and the holder is vertically inverted;
Fig. 5 is a pre-assembled perspective view illustrating an operating state in which the lever coupler is mounted to the holder after the holder is vertically inverted;
Fig. 6 is a perspective view illustrating a state in which the lever coupler is mounted on the vertically inverted holder;
Fig. 7 illustrates a form of the lever coupler, wherein Fig. 7A is a plan view, Fig. 7B is a side view, Fig. 7C is a bottom view, Fig. 7D is a front view, and Fig. 7E is a rear view;
Fig. 8 is a partially enlarged cross-sectional view illustrating a state in which engaging protrusions of tips of latch levers are engaged with engaging recesses of ferrule housings;
Fig. 9 is an enlarged longitudinal sectional view illustrating a state in which guide recess portions formed inside a mounting base of the lever coupler and guide protrusions formed outside the holder are engaged;
Fig. 10 is a side view illustrating another example of the invention equipped with a lever coupler formed by connecting an operating lever and latch levers in a parallel state;
Fig. 11 is a perspective view illustrating another example of the invention equally equipped with the lever coupler formed by connecting the operating lever and the latch levers in a parallel state;
Fig. 12 is a pre-assembled perspective view illustrating an operating state in which the lever coupler formed by connecting the operating lever and the latch levers in a parallel state is removed from a holder and the holder is vertically inverted;
Fig. 13 illustrates another embodiment of the lever coupler, wherein Fig. 13A is a plan view, Fig. 13B is a side view, Fig. 13C is a bottom view, Fig. 13D is a front view, and Fig. 13E is a rear view;
Fig. 14 is an enlarged longitudinal sectional view illustrating a state in which guide protrusions formed inside a mounting base of the lever coupler and guide recess portions formed outside the holder are engaged;
Figs. 15A to 15D are perspective views for sequentially illustrating an process of interchanging positions of a pair of optical connectors in the prior art; and
Figs. 15E to 15G are perspective views for sequentially illustrating the process of interchanging the positions of the pair of optical connectors in the prior art.

### MODE(S) FOR CARRYING OUT THE INVENTION

Hereinafter, an embodiment of a two core type optical connector plug according to the invention will be described in detail with reference to the drawings.

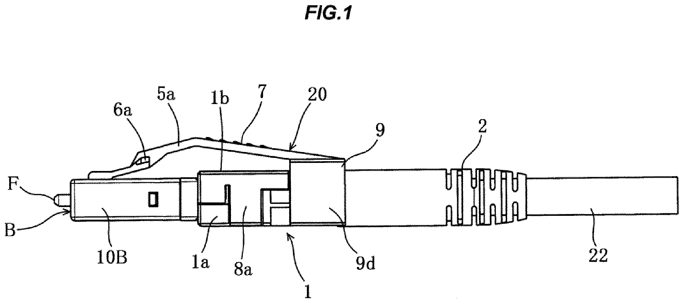

As illustrated in Figs. 1, 2 and 3, a two core type optical connector plug according to the invention is equipped with a holder 1 that holds ferrule housings 10A and 10B of a pair of optical connectors A and B and houses core wires (not illustrated) of a pair of optical fiber cables extending backward from the ferrule housings 10A and 10B, a boot 2 that simultaneously protects the pair of optical fiber cables (not illustrated) extending backward from the holder 1, and a lever coupler 20 that is mounted so as to be removable from the holder 1 in a forward/backward direction or in an upward/downward direction.

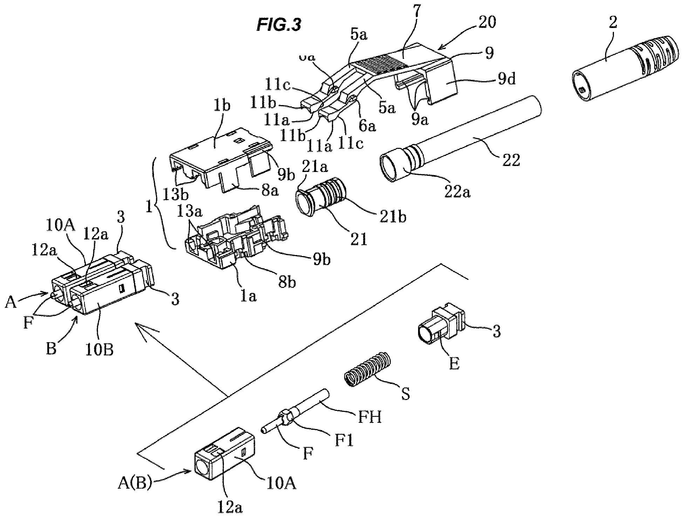

As illustrated in Fig. 3, all the optical connectors A and B are LC type optical connectors based on the same structure, and are generally made up of ferrules F that have insertion holes into which respective optical fiber (not illustrated) are inserted so as to be mounted on tips of the optical fiber (core wires), the ferrule housings 10A and 10B that hold and houses tubes FH running backward via flanges F1 of the ferrules F in inner circumferences thereof, coil springs S which are mounted in the ferrule housings 10A and 10B and whose one ends are locked on the flanges F1, and extender caps E that block rear opening sides of the ferrule housings 10A and 10B. The extender caps E draw the optical fiber cables via central holes in the backward direction, and function to lock the other ends of the coil springs S.

Further, the coil springs S are mounted between the flanges F1 and the extender caps E in a compressed state in an optical axis direction. Thereby, the ferrules F are biased to tip sides thereof by elastic forces of the coil springs S. Furthermore, the ferrule housings 10A and 10B themselves are held on a front side of the holder 1 (between upper and lower concave portions 13a and 13a to be described below) via tie portions 3 formed on rear outer circumferential surfaces of the extender caps E.

As illustrated in Fig. 3, the holder 1 has an approximately square case shape in whole due to a vertically bisected structure of a halved lower holder 1a and a halved upper holder 1b. Locking claws (not illustrated) directed inward from lower ends of locking pieces 8a formed on left and right sidewalls of the halved upper holder 1b are engaged with locked portions 8b that are located inside recesses formed on left and right sidewalls of the halved lower holder 1a, and thereby the halved holders 1a and 1b are formed into one body.

Then, the concave portions 13a and 13a for engaging the tip portions 3 and 3 formed at the rear of the respective ferrule housings 10A and 10B of the optical connectors A and B are formed at front sides of the halved holders 1a and 1b. A flange 21a having a large diameter at a tip of a tubular fiber post 21 is fixed at a rear end of the holder 1 in a state in which it is sandwiched between the halved holders 1a and 1b. A side of a caulking ring 22a with which a heat shrinkable tube 22 is equipped at a tip thereof is fitted outside at a rear diameter reduction portion 21b of the fiber post 21, and is caulked from an outer circumference of the rear diameter reduction portion 21b.

Further, as illustrated in Fig. 3, the core wires (not illustrated) extending from the rears of the respective ferrule housings 10A and 10B are housed between the halved holders 1a and 1b, and a pair of optical fiber cable ends into which the core wires are inserted are inserted into the fiber post 21 in a lump. The pair of optical fiber cables extending backward through the fiber post 21 are held and fixed by heating shrinkage of the heat shrinkable tube 22. Further, a tip opening side of the boot 2 is inserted and fixed around and to the caulking ring 22a so as to cover the heat shrinkable tube 22.

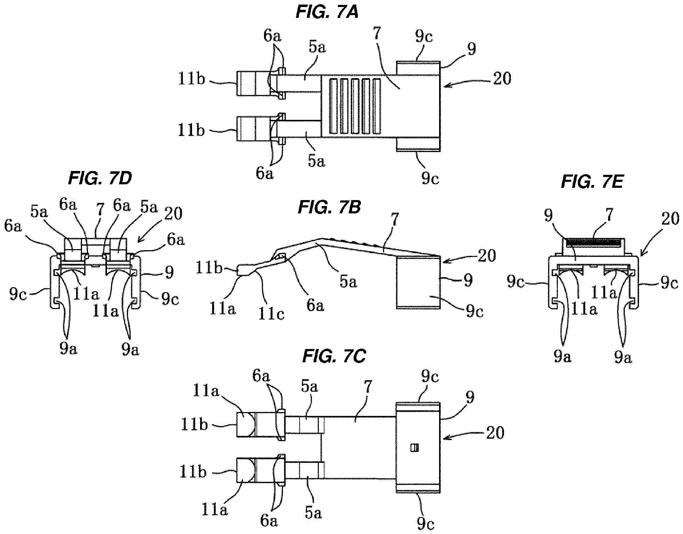

As illustrated in Figs. 1, 2, 3, and 7, the lever coupler 20 is configured in such a manner that a rear end side of a wide sheet of flat operating lever 7 is fixed to an upper surface of a mounting base 9 shaped of an approximately C-shaped frame and that a pair of latch levers 5a and 5a are dichotomized and connected to a tip side of the operating lever 7 so as to correspond to the respective ferrule housings 10A and 10B and provide elasticity. That is, the lever coupler 20 is formed of a member having elasticity. Connected portions between the operating lever 7 and the latch levers 5a and 5a present an approximate chevron shape when viewed from the side. Thereby, by pressing the operating lever 7 from above by hand, the latch levers 5a and 5a are pushed down against elasticity along with locking portions 6a and 6a, which will be described later, and the connected portion between the operating lever 7 and each of the latch levers 5a and 5a is adapted to be able to be stretched to a nearly flat shape.

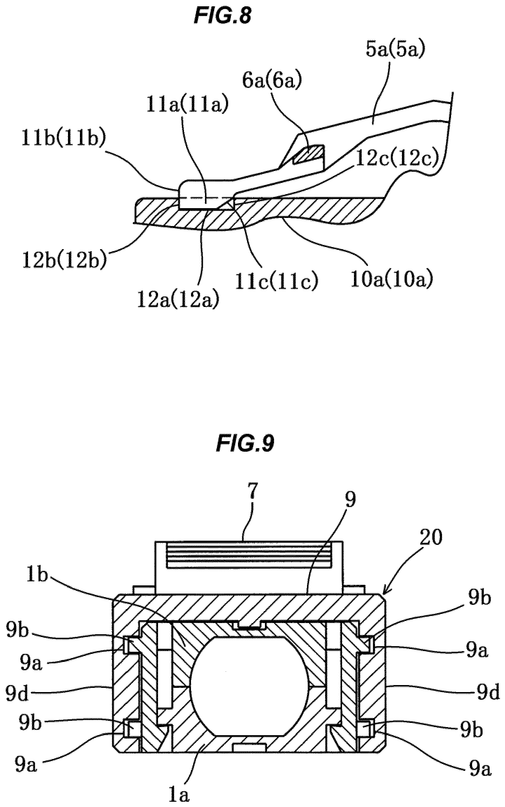

That is, as minutely illustrated in Fig. 8, the locking portions 6a and 6a detachably engaged with a locking groove (not illustrated) provided for the optical adaptor are protuberantly provided at both left and right ends of an approximately middle portion of each of the latch levers 5a and 5a, and a pair of engaging protrusions 11a and 11a are formed on lower surfaces of tips of the respective latch levers 5a and 5a.

On the other hand, a pair of engaging recesses 12a and 12a for detachably engaging the engaging protrusions 11a and 11a of the latch levers 5a and 5a are formed in two upper and lower surfaces of the respective ferrule housings 10A and 10B of the pair of optical connectors A and B.

Further, lower surfaces of the engaging protrusions 11a and 11a are formed on approximately arcuate concave surfaces when viewed from the front so as to correspond to each other, and inner bottom surfaces of the engaging recesses 12a and 12a are formed on convex surfaces so as to correspond to each other. Thereby, the engaging protrusions 11a and 11a and the engaging recesses 12a and 12a are adapted to maintain a close contact state to be engaged and connected at a given position without an offset in a transverse direction.

Furthermore, as illustrated in Fig. 8, front sides of the engaging protrusions 11a and 11a of the latch levers 5a and 5a, and front sides of the engaging recesses 12a and 12a of the ferrule housings 10A and 10B are formed on vertical surfaces 11b and 11b and 12b and 12b, respectively. Rear sides of the engaging protrusions 11a and 11a are formed on tapered surfaces 11c and 11c, and rear sides of the engaging recesses 12a and 12a are formed on vertical surfaces 12c and 12c. Thereby, the engaging recesses 12a and 12a of the ferrule housings 10A and 10B and the engaging protrusions 11a and 11a of the tips of the latch levers 5a and 5a engaged with the engaging recesses 12a and 12a with an elastic pressure are configured such that the vertical surfaces 12b and 12b and 11b and 11b collide with each other at front end sides thereof, and thus fear of separation of the latch levers 5a and 5a from the engaging recesses 12a and 12a of the ferrule housings 10A and 10B is reduced, whereas the separation of the latch levers 5a and 5a from the engaging recesses 12a and 12a of the ferrule housings 10A and 10B is smoothly carried out at rear end sides thereof by the tapered surfaces 11c and 11c provided at the rear sides of the engaging protrusions 11a and 11a of the latch levers 5a and 5a.

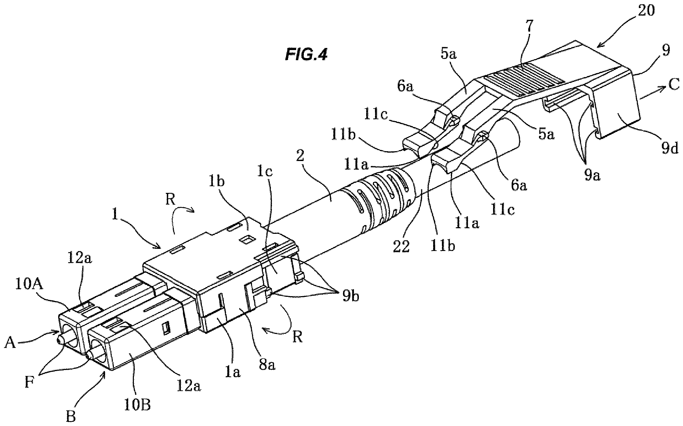

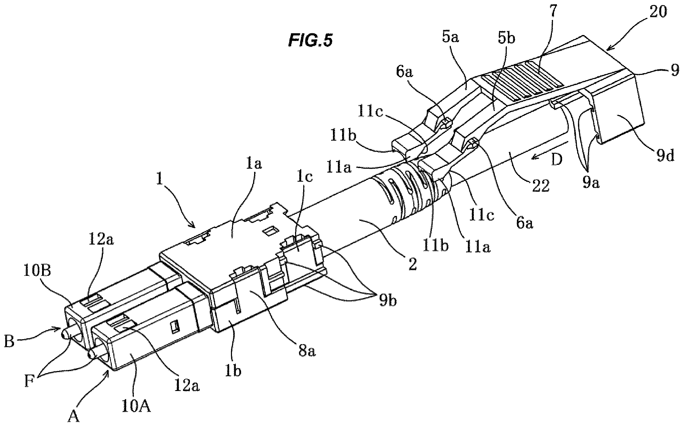

Two guide recess portions 9a and 9a are formed up and down at sides of left and right inner wall surfaces 9d and 9d of the mounting base 9 in a forward/backward direction, and two guide protrusions 9b and 9b are formed up and down at sides of left and right outer wall surfaces 1c and 1c of the holder 1 (or the halved lower holder 1a) in a forward/backward direction so as to correspond to the guide recess portions 9a and 9a. Thus, the lever coupler 20 is slidably mounted on and demounted from the holder 1 (in a direction of an arrow C of Fig. 4 and a direction of an arrow D of Fig. 5) by engagement between the guide recess portions 9a and 9a and the guide protrusions 9b and 9b. In the embodiment, the guide recess portions 9a and 9a are formed in the mounting base 9 of the lever coupler 20, and the guide protrusions 9b and 9b are formed on the holder 1. However, conversely the guide protrusions may be formed at the side of the mounting base 9, and the guide recess portions may be formed at the side of the holder 1.

Next, an example of a procedure of interchanging the positions of the pair of optical connectors A and B in the two core type optical connector plug regarding the form configured as described above will be described. In the following description, the same portions as in Figs. 1, 2, and 3 are given the same symbols, and proper description thereof will be omitted or simplified.

When the positions of the pair of optical connectors A and B are interchanged, first, the lever coupler 20 are, as illustrated in Fig. 4, removed from the holder 1 (in the direction of the arrow C of Fig. 4). In this case, the guide recess portions 9a and 9a of the mounting base 9 is caused to slide along the guide protrusions 9b and 9b of the holder 1 (or the halved lower holder 1a) in a removal direction (or in the direction of the arrow C). Then, the engaging protrusions 11a and 11a of the latch levers 5a and 5a are separated from the respective engaging recesses 12a and 12a formed on the upper surfaces of the ferrule housings 10A and 10B. However, at that time, the lever coupler 20 is smoothly removed from the holder 1 by the tapered surfaces 11d and 11d provided at the rear of the engaging protrusions 11a and 11a of the tips of the latch levers 5a and 5a and elasticity between the lever 7 and each of the latch levers 5a and 5a. Thus, as illustrated in Fig. 4, the holder 1 is vertically inverted along with the pair of optical connectors A and B (in a direction of an arrow R of Fig. 4).

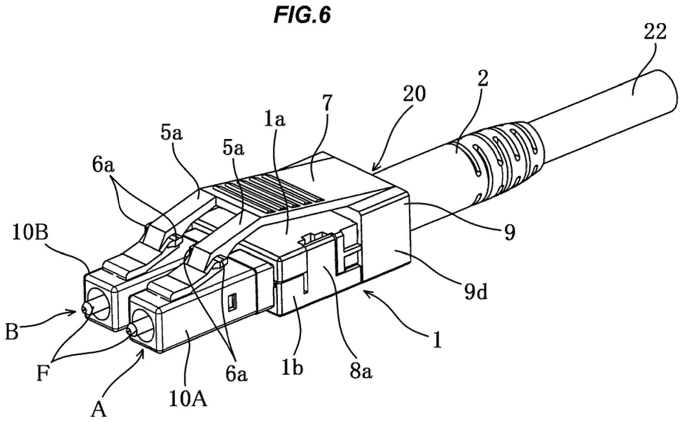

Subsequently, as illustrated in Fig. 5, the lever coupler 20 is again installed on the top of the inverted holder 1 (which is a portion that is the lower surface of the holder 1 before the inversion) (in a direction of an arrow D of Fig. 5). In this case, the guide recess portions 9a and 9a of the mounting base 9 is caused to slide in an inserting direction (in the direction of the arrow D) while being engaged with the guide protrusions 9b and 9b of the holder 1 (or the halved lower holder 1a). Then, the engaging protrusions 11a and 11a of the latch levers 5a and 5a are engaged with the respective engaging recesses 12a and 12a formed in the upper surfaces of the ferrule housings 10A and 10B by elasticity between the operating lever 7 and the latch levers 5a and 5a, and simultaneously the lever coupler 20 is inhibited from moving relative to the holder 1 in a drawing direction. Thereby, as illustrated in Fig. 6, the positions of the pair of optical connectors A and B are interchanged left and right.

In using the two core type optical connector plug, the pair of optical connectors A and B are inserted into the respective insertion openings (not illustrated) of the optical adaptors. At this time, the locking portions 6a and 6a projected on both sides of the middle portion of each of the latch levers 5a and 5a are pushed down at an upper edge of each insertion opening once, and then the locking portions 6a and 6a are engaged with the locking groove (not illustrated) provided for the optical adaptor by the elasticity between the operating lever 7 and each of the latch levers 5a and 5a. Thereby, the optical connectors A and B are inhibited from being removed from the optical adaptors.

When the pair of optical connectors A and B are pulled out of the respective insertion openings of the optical adaptors, the operating lever 7 is pressed downward against the elasticity between the operating lever 7 and the latch levers 5a and 5a by hand. Then, the latch levers 5a and 5a are pushed down along with the locking portions 6a and 6a projected on both sides of the middle portions thereof at the same time, and the locking portions 6a and 6a are disengaged from the locking grooves (not illustrated) provided for the optical adaptors. Thereby, the pair of optical connectors A and B are smoothly removed from the respective insertion openings of the optical adaptors by the tapered surfaces 11d and 11d of the rear ends of the engaging protrusions 11a and 11a of the latch levers 5a and 5a and by a function of the elasticity of the lever coupler 20.

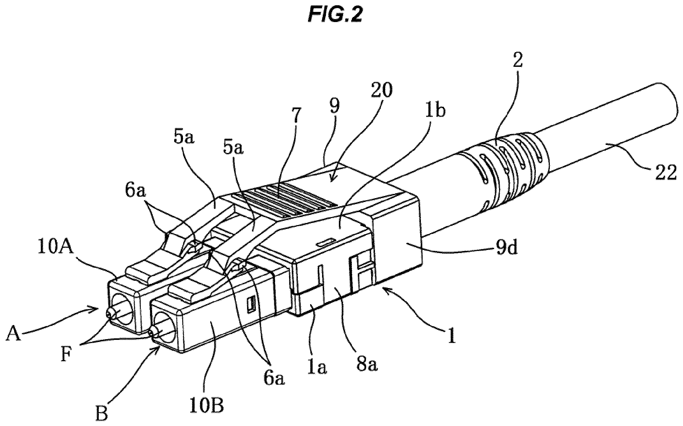

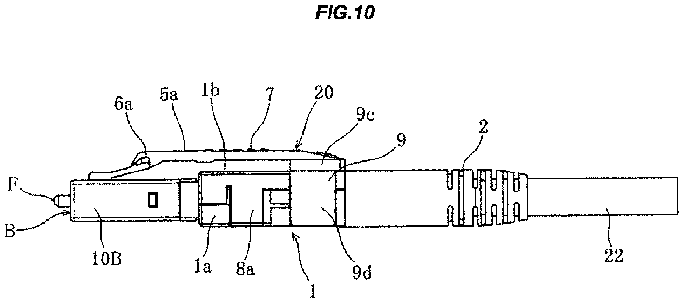

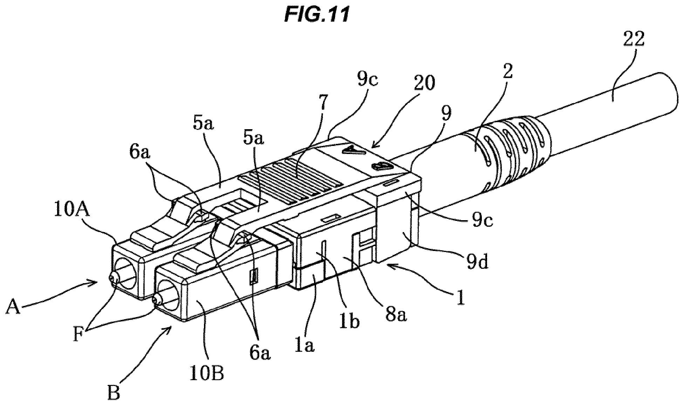

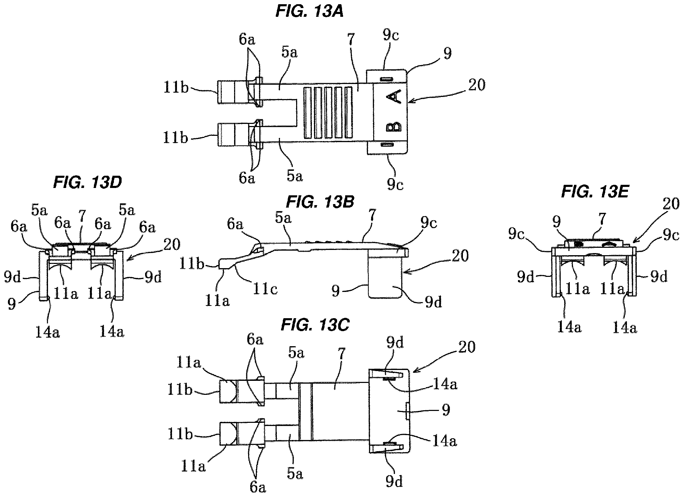

In Figs. 10 to 14, another example of the holder 1 and another example of the lever coupler 20 are illustrated. In the following description, the same portions as in Figs. 1 and 2 are given the same symbols, and proper description thereof will be omitted or simplified.

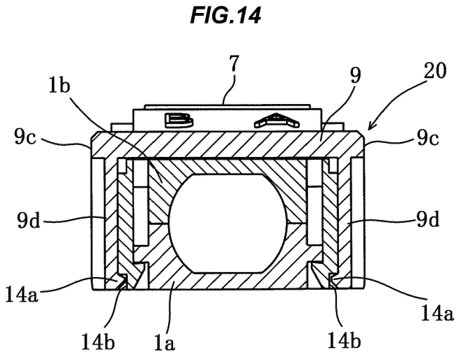

As illustrated in Figs. 10 and 14, the lever coupler 20 in this example is configured such that connected portions between an operating lever 7 and a pair of latch levers 5a and 5a are mutually connected by an approximately flat (parallel) structure. At this time, as illustrated in Fig. 10, a gap between an upper surface of a halved upper holder 1b of the holder 1 and a lower surface of the lever coupler 20 is formed, and thus the connected portions between the operating lever 7 and the pair of latch levers 5a and 5a are bent in an approximately inverted chevron shape when viewed from the side by downward pressing of the operating lever 7, and the advantage that the engagement with the locking grooves (not illustrated) of the optical adaptors caused by the pair of latch levers 5a and 5a (locking portions 6a and 6a) is easily released even by a weak operating force of pressing the operating lever 7 by hand is obtained.

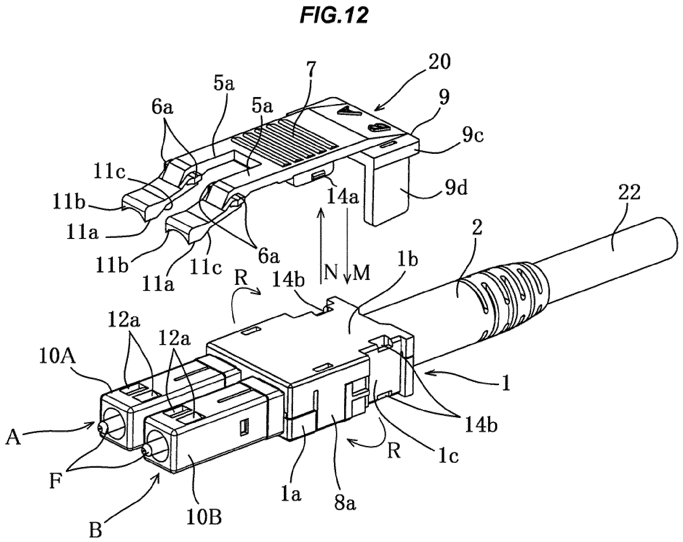

Further, locking protrusions 14a and 14a are formed at lower sides of left and right inner wall surfaces of a mounting base 9 so as to be opposite to each other, and locking recesses 14b and 14b are formed at upper and lower sides of left and right outer wall surfaces of the holder 1(or the halved lower holder 1a) so as to correspond to the locking protrusions 14a and 14a. Thus, the lever coupler 20 is fixed to the holder 1 in a state in which upward pullout movement relative to the holder 1 is inhibited by engagement between any of the locking protrusions 14a and 14a and the locking recesses 14b and 14b (in a direction of an arrow M of Fig. 12).

That is, when positions of a pair of optical connectors A and B are interchanged, first, as illustrated in Fig. 12, flanges 9c formed at both upper ends of the mounting base 9 of the lever coupler 20 are pulled upward by fingertips. Thereby, the lever coupler 20 is forcibly removed from the holder 1 (in a direction of an arrow N of Fig. 12). Thus, the holder 1 is vertically inverted along with the pair of optical connectors A and B (in the direction of the arrow R of Fig. 12), the lever coupler 20 is again installed on the top of the inverted holder 1 (which is a portion that is a lower surface of the holder 1 before the inversion) (in a direction of an arrow M of Fig. 12). In this case, engaging protrusions 11a and 11a of the latch levers 5a and 5a are engaged with respective engaging recesses 12a and 12a formed in the ferrule housings 10A and 10B like the aforementioned first embodiment. Simultaneously, the locking protrusions 14a and 14a formed at the lower sides of the opposite inner wall surfaces of the mounting base 9 are engaged with the locking recesses 14b located below among the locking recesses 14b and 14b of the inverted holder 1. Thereby, the positions of the pair of optical connectors A and B are interchanged left and right.

In the invention, the holder 1 and the lever coupler 20 are configured as described above, and can thus be mounted or demounted by a tough of fingertips alone in any case of the first embodiment and the second embodiment. Accordingly, when both are mounted or demounted, a mounting/demounting tool such as a driver is not required.

### EXPLANATIONS OF LETTERS OR NUMERALS

A, B: optical connector
E: extender cap
F: ferrule
F1: flange
FH: tube
S: coil spring
1: holder
1a: halved lower holder
1b: halved upper holder
1c: left and right outer wall surfaces
2: boot
3: tie portion
5a, 5a: latch lever
6a, 6a: locking portion
7: operating lever
8a: locking piece
8b: locked portion
9: mounting base
9a: guide recess portion
9b: guide protrusion
9c: flange
9d: left and right sidewall surface
10A, 10B: ferrule housing
11a, 11a: engaging protrusion
11b, 11b: vertical surface
11c, 11c: tapered surface
12a, 12a: engaging recess
12b, 12b: vertical surface
12c, 12c: vertical surface
13a, 13a: concave portion
14a: locking protrusion
14b: locking recess
20: lever coupler
21: fiber post
21a: flange
22: heat shrinkable tube
22a: caulking ring
100a, 100b: ferrule housing
101: connector housing
101a: lower connector housing halved body
101b: upper connector housing halved body
102: boot
103: tie portion
104: concave portion
105a, 105b: latch lever
106a, 106b: locking protrusion
107: operating lever
108: locking claw
109a: guide recess portion
110: elastic locking piece

## Claims

1. A two core type optical connector plug comprising:
a holder (1) configured to hold ferrule housings (10A, 10B) of a pair of optical connectors (A, B) to become one body, and to house core wires of a pair of optical fiber cables extending backward from the ferrule housings (10A, 10B);
a boot (2) configured to simultaneously protect the pair of optical fiber cables extending backward from the holder (1); and
a lever coupler (20) provided to be mountable on or demountable from the holder (1) and is formed of a member having elasticity,
wherein the lever coupler (20) is formed such that a pair of latch levers (5a, 5b) are connected to a tip side of an operating lever (7) mounted on a rear end of the lever coupler (20), where the latch levers (5a, 5b) correspond to the respective ferrule housings (10A, 10B),
**characterized in that**, the plug further comprises engaging recesses (12a) formed in two upper and lower surfaces of each of the ferrule housings (10A, 10B) of the pair of optical connectors (A, B) for detachably engaging engaging protrusions (11a) of tips of the pair of latch levers (5a, 5b).

2. The two core type optical connector plug according to claim 1, wherein the engaging protrusions (11a) engaged with the engaging recesses (12a) of the respective ferrule housings (10A, 10B) are formed at the tips of the pair of latch levers (5a, 5b).

3. The two core type optical connector plug according to claim 1, wherein the lever coupler (20) is configured in such a manner that a rear end side of the operating lever (7) is fixed to a mounting base (9) shaped of an approximately C-shaped frame and that engaging mechanisms are arranged at sides of left and right inner wall surfaces of the mounting base (9) and sides of left and right outer wall surfaces of the holder so as to be mutually mountable or demountable.

4. The two core type optical connector plug according to claim 3, wherein the engaging mechanisms are formed by guide recess portions (9a) provided at the sides of left and right inner wall surfaces of the mounting base and by guide protrusions (9b) provided at the sides of left and right outer wall surfaces of the holder.

5. The two core type optical connector plug according to claim 3, wherein the engaging mechanisms are formed by guide protrusions provided at the sides of left and right inner wall surfaces of the mounting base and by guide recess portions provided at the sides of left and right outer wall surfaces of the holder.

6. The two core type optical connector plug according to claim 1, wherein the lever coupler (20) is connected to present an approximate chevron shape when viewed from the side by the operating lever (7) and the latch levers (5a, 5b).

7. The two core type optical connector plug according to claim 1, wherein the lever coupler (20) is connected to present an approximately flat shape when viewed from the side by the operating lever (7) and the latch levers (5a, 5b).

8. The two core type optical connector plug according to any of claims 1 or 2, wherein tapered surfaces (11c) are formed on rear ends of the engaging protrusions (11a) provided at the tips of the latch levers (5a, 5b).

## Patentansprüche

1. Zweiadriger optischer Steckverbinder, Folgendes beinhaltend:
einen Halter (1), welcher konfiguriert ist, um Klemmringgehäuse (10A, 10B) eines Paares von optischen Steckverbindern (A, B) zu einem einzigen Körper zusammenzufassen, und um Kerndrähte eines Paares von Lichtwellenleiterkabeln unterzubringen, welche sich rückwärts von den Klemmringgehäusen (10A, 10B) weg erstrecken;
einen Schuh (2), welcher konfiguriert ist, um gleichzeitig das Paar von Lichtwellenleiterkabeln zu schützen, welche sich rückwärts vom Halter (1) weg erstrecken; und
einen Hebelkoppler (20), welcher bereitgestellt ist, um am Halter (1) montierbar bzw. davon demontierbar zu sein und welcher aus einem elastischen Element gebildet ist,
wobei der Hebelkoppler (20) so gebildet ist, dass ein Paar von Verriegelungshebeln (5a, 5b) mit einer Spitzenseite eines Bedienhebels (7) verbunden ist, welcher an einem hinteren Ende des Hebelkopplers (20) montiert ist, wobei die Verriegelungshebel (5a, 5b) den jeweiligen Klemmringgehäusen (10A, 10B) entsprechen,
**dadurch gekennzeichnet, dass** der Stecker zudem Eingriffsvertiefungen (12a) beinhaltet, welche in zwei oberen und unteren Oberflächen eines jeden der Klemmringgehäuse (10A, 10B) des Paares von optischen Steckverbindern (A, B) zum lösbaren Eingriff mit Eingriffsvorsprüngen (11a) von Spitzen des Paares von Verriegelungshebeln (5a, 5b) gebildet sind.

2. Zweiadriger optischer Steckverbinder nach Anspruch 1, bei welchem die Eingriffsvorsprünge (11a), welche mit den Eingriffsvertiefungen (12a) der jeweiligen Klemmringgehäuse (10A, 10B) in Eingriff stehen, an den Spitzen des Paares von Verriegelungshebeln (5a, 5b) gebildet sind.

3. Zweiadriger optischer Steckverbinder nach Anspruch 1, bei welchem der Hebelkoppler (20) in einer Weise konfiguriert ist, dass ein hinteres Ende des Bedienhebels (7) an einer Montagebasis (9) befestigt ist, welche annähernd einem C-förmigen Rahmen ähnlich geformt ist, und dass Eingriffsmechanismen an Seiten von linken und rechten inneren Wandflächen der Montagebasis (9) und an Seiten von linken und rechten äußeren Wandflächen des Halters so angeordnet sind, dass sie aneinander montierbar und demontierbar sind.

4. Zweiadriger optischer Steckverbinder nach Anspruch 3, bei welchem die Eingriffsmechanismen durch Führungsvertiefungsabschnitte (9a) gebildet werden, welche an den Seiten von linken und rechten inneren Wandflächen der Montagebasis bereitgestellt sind, und durch Führungsvorsprünge (9b), welche an den Seiten von linken und rechten äußeren Wandflächen des Halters bereitgestellt sind.

5. Zweiadriger optischer Steckverbinder nach Anspruch 3, bei welchem die Eingriffsmechanismen durch Führungsvorsprünge gebildet werden, welche an den Seiten von linken und rechten inneren Wandflächen der Montagebasis bereitgestellt sind, und durch Führungsvertiefungsabschnitte, welche an den Seiten von linken und rechten äußeren Wandflächen des Halters bereitgestellt sind.

6. Zweiadriger optischer Steckverbinder nach Anspruch 1, bei welchem der Hebelkoppler (20) angeschlossen ist, um eine annähernde Zickzackform aufzuweisen, wenn er von der Seite des Bedienhebels (7) und der Verriegelungshebel (5a, 5b) betrachtet wird.

7. Zweiadriger optischer Steckverbinder nach Anspruch 1, bei welchem der Hebelkoppler (20) angeschlossen ist, um eine annähernd flache Form aufzuweisen, wenn er von der Seite des Bedienhebels (7) und der Verriegelungshebel (5a, 5b) betrachtet wird.

8. Zweiadriger optischer Steckverbinder nach einem der Ansprüche 1 oder 2, bei welchem abgeschrägte Flächen (11c) an hinteren Enden der Eingriffsvorsprünge (11a) gebildet sind, welche an den Spitzen der Verriegelungshebel (5a, 5b) bereitgestellt sind.

## Revendications

1. Fiche de connecteur optique de type à deux noyaux, comprenant :
un support (1) configuré afin de maintenir des logements de virole (10A, 10B) d'une paire de connecteurs optiques (A, B) afin qu'ils deviennent un corps, et afin d'abriter des fils de noyau d'une paire de câbles en fibres optiques s'étendant vers l'arrière depuis les logements de virole (10A, 10B) ;
un coffre (2) configuré afin de protéger simultanément la paire de câbles en fibres optiques s'étendant vers l'arrière depuis le support (1) ; et
un raccord à levier (20) fourni afin de pouvoir être monté sur, ou démonté du, support (1) et qui est formé d'un élément présentant une élasticité,
dans laquelle le raccord à levier (20) est formé de sorte qu'une paire de leviers verrouillables (5a, 5b) soient connectés à un côté de pointe d'un levier opérationnel (7) monté sur une extrémité arrière du raccord à levier (20), où les leviers verrouillables (5a, 5b) correspondent aux logements de virole respectifs (10A, 10B),
**caractérisée en ce que**, la fiche comprend en outre des cavités de prise (12a) ménagées dans deux surfaces supérieure et inférieure de chaque logement de virole (10A, 10B) de la paire de connecteurs optiques (A, B) afin de mettre en prise de manière détachable des saillies (11a) des pointes de la paire de leviers verrouillables (5a, 5b).

2. Fiche de connecteur optique de type à deux noyaux selon la revendication 1, dans laquelle les saillies de prise (11a) mises en prise avec les cavités de prise (12a) des logements de virole respectifs (10A, 10B) sont formées aux pointes de la paire de leviers verrouillables (5a, 5b).

3. Fiche de connecteur optique de type à deux noyaux selon la revendication 1, dans laquelle le raccord à levier (20) est configuré de sorte qu'un côté à l'extrémité arrière du levier de fonctionnement (7) soit fixé à une base de montage (9) en forme de cadre approximativement en forme de C et que des mécanismes de prise soient agencés sur des côtés des surfaces de paroi intérieure gauche et droite de la base de montage (9) et des côtés de surfaces de paroi extérieure gauche et droite du support, de façon à ce qu'ils soient réciproquement montables ou démontables.

4. Fiche de connecteur optique de type à deux noyaux selon la revendication 3, dans laquelle les mécanismes de prise sont formés par des parties de cavité de guidage (9a) ménagées sur les côtés des surfaces de paroi intérieure gauche et droite de la base de montage et par des saillies de guidage (9b) ménagées sur les côtés de surfaces de paroi extérieure gauche et droite du support.

5. Fiche de connecteur optique de type à deux noyaux selon la revendication 3, dans laquelle les mécanismes de prise sont formés par des saillies de guidage ménagées sur les côtés des surfaces de paroi intérieure gauche et droite de la base de montage et par des parties de cavités de guidage ménagées sur les côtés des surfaces de paroi extérieure gauche et droite du support.

6. Fiche de connecteur optique de type à deux noyaux selon la revendication 1, dans laquelle le raccord à levier (20) est raccordé afin de présenter une forme approximative de chevron lorsqu'il est visualisé depuis le côté par le levier de fonctionnement (7) et les leviers verrouillables (5a, 5b).

7. Fiche de connecteur optique de type à deux noyaux selon la revendication 1, dans laquelle le raccord à levier (20) est raccordé afin de présenter une forme approximativement plate lorsqu'il est visualisé depuis le côté par le levier de fonctionnement (7) et les leviers verrouillables (5a, 5b).

8. Fiche de connecteur optique de type à deux noyaux selon l'une quelconque des revendications 1 à 2, dans laquelle des surfaces coniques (11c) sont formées sur les extrémités arrière des saillies de prise (11a) ménagées aux pointes des leviers verrouillables (5a, 5b).
